# EUROPEAN PATENT APPLICATION

(11) **EP 4 586 221 A1**
(43) Date of publication of application: **16.07.2025**
(21) Application number: 24219185.6
(22) Date of filing: 11.12.2024
(51) Int. Cl.: G06V 20/00, G06V 20/52, G06V 40/16

(54) **CONTROL APPARATUS, CONTROL METHOD, AND STORAGE MEDIUM**

(30) Priority: 09.01.2024 JP 2024001324
(71) Applicant: CANON KABUSHIKI KAISHA, Tokyo 146-8501 (JP)
(72) Inventor: YAMAMOTO, Takahisa, Tokyo, 146-8501 (JP)
(74) Representative: Canon Europe Limited

(57) **Abstract**

A control apparatus includes an image obtaining unit configured to obtain an image including a person, a person estimation unit configured to execute estimation processing to estimate information about the person based on the image and output a result of the estimation processing, a status monitoring unit configured to determine a use status of the estimation processing by the person estimation unit, and an estimation control unit configured to limit at least one of the estimation processing and the output of the result of the estimation processing by the person estimation unit based on a result of the determination of the use status by the determination unit.

## Description

### BACKGROUND OF THE INVENTION

### Field of the Invention

The present invention relates to a technique for controlling estimation processing.

### Description of the Related Art

A large number of techniques for performing advanced processing on an image to extract useful information have recently been proposed. Among these techniques, in particular, techniques for recognizing a person's face using a multi-level neural network called a deep network (also referred to as a deep neural network, or deep learning) have been actively studied and developed. Face recognition techniques using a deep network are also used for person authentication processing in which, for example, an input face image is compared with a preliminarily registered face image to determine whether the person corresponding to the input face image matches the person corresponding to the registered face image. The technique for extracting information from an image using a deep network is applied not only to face recognition but also to studies on techniques for estimating the emotion of a person based on a face image corresponding to the person.

Japanese Patent Application Laid-Open No. 2013-192614 discusses a technique for allowing a user to arbitrarily enable or disable facial authentication by operating a prohibition button in a configuration in which the user is allowed to execute two types of authentication processing, i.e., card authentication for identifying a person and facial authentication for identifying a person based on face image information corresponding to the person. Japanese Patent Application Laid-Open No. 2018-129750 also discusses a technique for comparing data on an image of a person extracted from a captured image, which cannot be visually identified, with registered person data that is preliminarily registered for a person to be detected, to thereby determine whether a subject in the data on the image of the person that cannot be visually identified matches the person to be detected.

It can also be said that various estimation processing including the face recognition technique may violate the privacy, human rights, or the like, of people. Accordingly, in the case of using estimation processing, it is necessary to be careful not to violate the privacy and human rights. There is a debate that it may be desirable to put a certain level of limitation on the use of estimation processing including the face recognition technique. For example, the European Union (EU) has discussed enacting a law banning the use of an artificial intelligence (AI) to perform a large-scale surveillance activity using the face recognition technique in a public place.

### SUMMARY OF THE INVENTION

However, since the face recognition technique has been commercially available, for example, it is difficult to check how the face recognition technique is used. In some cases, the face recognition technique may be used in such a status that may violate the privacy, human rights, or the like, of people.

Accordingly, the present invention is directed to reducing the risk of occurrence of a status that may violate the privacy, human rights, or the like of people.

According to a first aspect of the present invention, there is provided a control apparatus as specified in claims 1 to 16. According to a second aspect of the present invention, there is provided a control method as specified in claim 17. According to a third aspect of the present invention, there is provided a storage medium as specified in claim 18.

Further features of the present invention will become apparent from the following description of embodiments with reference to the attached drawings.

### BRIEF DESCRIPTION OF THE DRAWINGS

Fig. 1 is a block diagram illustrating a configuration example of an artificial intelligence (AI) system according to a first embodiment.
Fig. 2 illustrates an example of an obtained image.
Fig. 3 is a block diagram illustrating a configuration example of a person estimation unit.
Fig. 4 is a table illustrating examples of registered biometric identifiers managed by an identifier management unit.
Fig. 5 is a block diagram illustrating a configuration example of a status monitoring unit according to the first embodiment.
Fig. 6 is a flowchart illustrating processing performed by the AI system according to the first embodiment.
Fig. 7 is a block diagram illustrating a configuration example of an AI system according to a second embodiment.
Fig. 8 is a block diagram illustrating a configuration example of a status monitoring unit according to the second embodiment.
Fig. 9 is a flowchart illustrating processing performed by the AI system according to the second embodiment.
Fig. 10 is a block diagram illustrating a configuration example of a status monitoring unit according to a third embodiment.
Fig. 11 is a flowchart illustrating processing performed by the AI system according to the third embodiment.
Fig. 12 is a block diagram illustrating a configuration example of an AI system according to a fourth embodiment.
Fig. 13 is a block diagram illustrating a hardware configuration example of the AI system.

### DESCRIPTION OF THE EMBODIMENTS

Embodiments of the present invention will be described below with reference to the drawings. The following embodiments are not intended to limit the present invention, and not all combinations of features described in the embodiments are essential to the solution of the present invention. The configurations of the embodiments can be appropriately modified or changed depending on the specifications of the apparatus to which the present invention is applied and various conditions (usage conditions, usage environment, etc.).

In the following embodiments, the same or like components are denoted by the same reference numerals and the same or like processing steps are denoted by the same step numbers, and repeated descriptions are omitted.

In a first embodiment, an artificial intelligence (AI) system will be described as an application example of a control apparatus that performs person authentication (biometric authentication) using a face recognition technique. In the first embodiment, the person authentication using the face recognition technique refers to a person authentication technique for obtaining a face image as biometric information, extracting information (biometric identifier) representing an individual person from the face image, and identifying person identification information (person ID) about the person using the biometric information.

However, some methods using the face recognition technique may cause the risk of violating the privacy, human rights violations, or the like, of people. Accordingly, the AI system used as an application example of the control apparatus according to the first embodiment estimates the use status of the face recognition technique, thereby determining whether the face recognition technique is used in a way that causes the risk. If it is determined that the face recognition technique is used in a way that causes the risk, the AI system according to the first embodiment performs control processing to limit at least one of face recognition processing and output of a face recognition processing result. The first embodiment illustrates an example where the face recognition technique is used in a public place and face recognition processing is to be stopped if it is determined that the use of the face recognition technique may cause the risk of violating the privacy or human rights of people.

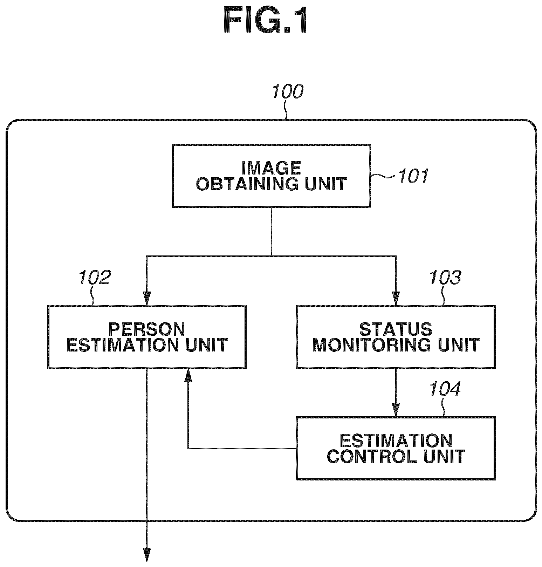

Fig. 1 is a block diagram illustrating a configuration example of an AI system 100 using the face recognition technique as an example of the control apparatus according to the first embodiment.

An image obtaining unit 101 illustrated in Fig. 1 obtains an image captured by a camera or the like. The image obtaining unit 101 may include an image capturing device such as a camera. The image obtaining unit 101 obtains an image from which information is extracted using an AI. In the first embodiment, assume that an image including a person's face on which face recognition processing is performed is obtained by the image obtaining unit 101.

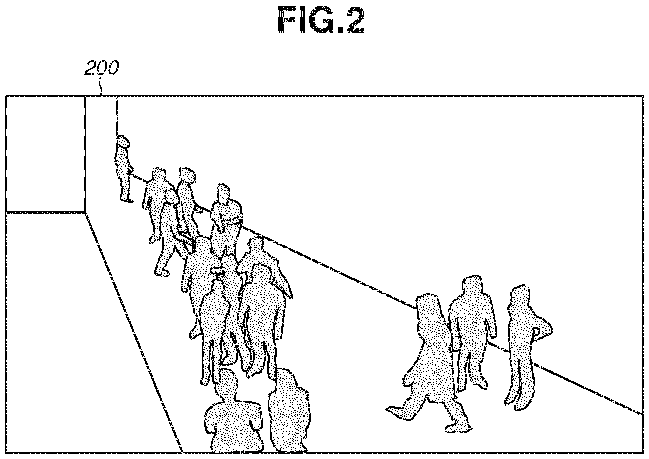

Various types of images are obtained by the image obtaining unit 101 depending on installation conditions (installation site, angle of view) of the image obtaining unit 101. The first embodiment illustrates an example where the image obtaining unit 101 obtains an image captured by a monitoring camera installed at a street corner or the like, assuming that the image obtaining unit 101 has obtained an image 200 including a plurality of persons walking on the street, for example, as illustrated in Fig. 2.

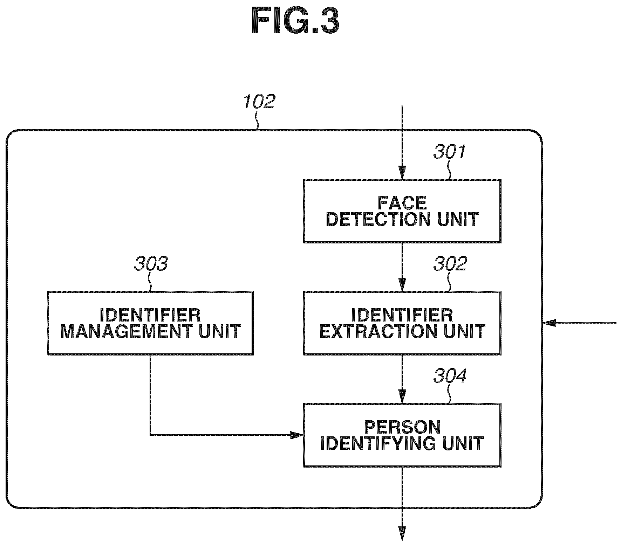

A person estimation unit 102 is a functional unit that executes estimation processing to estimate information about a person from the image obtained by the image obtaining unit 101. For example, the person estimation unit 102 has a configuration as illustrated in Fig. 3.

In a configuration example illustrated in Fig. 3, a face detection unit 301 detects a face area from the image received from the image obtaining unit 101. Any known method may be used as a method for detecting a face area. Examples of the method include a method of extracting shapes corresponding to parts within the face, such as the nose, mouse, and eyes, estimating the size of the face based on the sizes of both eyes and the distance between the eyes, and detecting an area surrounded by an area with the size estimated based on the position corresponding to the center of the nose as a face area. The image of the face area detected by the face detection unit 301 is output as a face area image normalized to a predetermined size. Any known method may be used as a normalization method. In the case of the image 200 illustrated in Fig. 2, a plurality of persons is captured in the image 200. In this case, the face detection unit 301 detects a plurality of faces.

An identifier extraction unit 302 extracts useful information (information called a biometric identifier) for identifying an individual person from the face area image transmitted from the face detection unit 301. Biometric identifier extraction processing in the identifier extraction unit 302 is performed on each input face area image. The identifier extraction unit 302 according to the first embodiment is implemented by a deep network for which parameters suitable for extraction of biometric identifiers are set. The parameters suitable for extraction of biometric identifiers can be obtained by performing machine learning on the deep network. In other words, the identifier extraction unit 302 is made of a learned deep network. Each biometric identifier extracted by the deep network is generally represented as a multi-dimensional vector, and thus is also referred to as a feature vector. The identifier extraction unit 302 outputs the biometric identifier extracted from the input face area image to a person identifying unit 304.

An identifier management unit 303 manages registered biometric identifiers preliminarily calculated based on the face area images of the registered persons. The term "registered person" refers to a person for which a person ID is to be identified by face recognition processing.

Each registered feature vector may be extracted from an image of a registered person in a procedure similar to that described above. Specifically, face detection processing is performed on an image including a registered person, and a biometric identifier extracted from a face area image obtained as a result of detecting the face of the registered person may be used as a registered biometric identifier. The identifier management unit 303 manages the person IDs and the registered biometric identifiers of registered persons in association with each other.

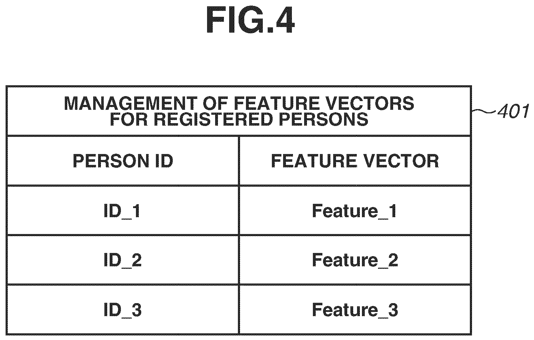

Fig. 4 illustrates an example of a management table 401 used to manage person IDs and registered biometric identifiers for the persons in the identifier management unit 303. As illustrated in Fig. 4, the management table 401 illustrates information representing correspondence relationships between person IDs corresponding to registered persons and registered biometric identifiers for the registered persons. For example, a person with a person ID "ID_1" corresponds to a registered biometric identifier "Feature_1". Similarly, a person with a person ID "ID_2" corresponds to a registered biometric identifier "Feature_2", and a person with a person ID "ID_3" corresponds to a registered biometric identifier "Feature_3".

The person identifying unit 304 compares the biometric identifier transmitted from the identifier extraction unit 302 with the registered biometric identifiers managed by the identifier management unit 303 and calculates a similarity score. In the first embodiment, a cosine distance between the two biometric identifiers is used as a similarity score. That is, the cosine distance can be calculated because each biometric identifier is represented as a multi-dimensional vector as described above. Accordingly, it can be said that the degree of similarity between the two biometric identifiers increases as the similarity score increases. The person identifying unit 304 compares a maximum similarity score among a plurality of similarity scores calculated based on the biometric identifier extracted by the identifier extraction unit 302 and a plurality of registered biometric identifiers managed by the identifier management unit 303 with a preset score threshold. If the maximum similarity score exceeds the score threshold, the person identifying unit 304 determines that the person is identical to the registered person corresponding to the registered biometric identifier when the similarity score is calculated, and identifies the person ID of the person corresponding to the face area image from which the biometric identifier is extracted by the identifier extraction unit 302.

For example, if three feature vectors as illustrated in Fig. 4 are managed by the identifier management unit 303, the person identifying unit 304 calculates three similarity scores. If the maximum similarity score among the three similarity scores exceeds a preset threshold, the person ID corresponding to the feature vector used to calculate the maximum similarity score is identified as the person ID corresponding to the face area image input to the identifier extraction unit 302.

The person estimation unit 102 implements biometric authentication processing using the above-described face recognition technique.

In the first embodiment, the person estimation unit 102 switches an operation mode between a mode (normal operation mode) in which face recognition processing is executed and a mode (estimation stop mode) in which face recognition processing is stopped under the control of an estimation control unit 104. Specifically, the estimation control unit 104 controls the person estimation unit 102 to execute or stop the face recognition processing. The estimation stop mode in which the face recognition processing is stopped may include a case where output of a result of the estimation processing is limited, while estimation processing for face recognition is executed. In other words, the person estimation unit 102 may switch the operation mode between a mode in which the result of face recognition processing is output and a mode in which the result of face recognition processing is not output under the control of the estimation control unit 104.

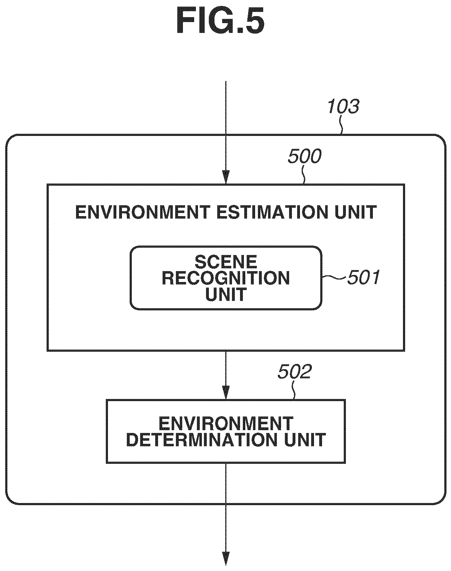

A status monitoring unit 103 illustrated in Fig. 1 is supplied with the image from the image obtaining unit 101. Fig. 5 is a block diagram illustrating a configuration example of the status monitoring unit 103.

In a configuration example illustrated in Fig. 5, an environment estimation unit 500 estimates an environment in which an input image is captured, or an environment such as a place or status where the image to be used for face recognition is obtained, based on the input image. In the first embodiment, the environment to be estimated indicates a predetermined place, such as a public place, and the status or the like, of the place. The first embodiment illustrates an example where a scene recognition technique is used as an implementation form of the environment estimation unit 500.

In the configuration example illustrated in Fig. 5, a scene recognition unit 501 estimates a scene indicated by an input image based on the input image. In the first embodiment, the scene recognition technique indicates a technique for estimating a type of a place where the image is obtained. For example, if a bench, a swing, or the like, is captured in the image, a place such as a "park" is estimated as the place where the image is obtained in scene recognition. Any known method may be used as a method for implementing scene recognition in the scene recognition unit 501. For example, object detection processing may be performed on the image and "what" is captured in "which" part of the image may be estimated, and then the scene may be estimated based on the positional relationship between the detected objects. Alternatively, since a large number of scene recognition techniques using a deep network have recently been studied and developed, such scene recognition techniques may be used. In the first embodiment, the scene recognition unit 501 uses a scene recognition technique using a deep network.

Since the first embodiment assumes a case where the face recognition technique is used in a public place as described above, if face recognition processing is performed in such a public place, there is a risk of violating the privacy or human rights of people.

For this reason, the scene recognition unit 501 performs scene recognition processing to determine whether the environment in which the image on which face recognition processing is to be performed is obtained is a public place. The scene recognition unit 501 configured to perform estimation processing to determine whether the environment is a public place can be implemented by preparing a large number of images of public places and causing the deep network to learn the images. Alternatively, if a more versatile scene recognition technique can be used and a scene associated with a public place such as a "park", "coast", or "square" can be obtained as an estimation result, the scene recognition unit 501 may determine the environment to be a public place.

The scene recognition unit 501 determines whether the environment in which the image is obtained by the image obtaining unit 101 as described above is a public place, and outputs the determination result. For example, in a scene indicating that a large number of people are walking on the street, like in the image 200 illustrated in Fig. 2, the scene recognition unit 501 determines the environment to be a public place.

An environment determination unit 502 determines whether the environment in which the image is captured by the image obtaining unit 101 is an inappropriate environment for face recognition processing based on the estimation result from the environment estimation unit 500. In the present embodiment, if the estimation result indicating that the environment is a public place is input as a result of scene recognition, the environment determination unit 502 determines that the environment is an inappropriate environment for face recognition processing, and outputs the determination result to the estimation control unit 104 as use status information. On the other hand, if the estimation result indicating that the environment is a place other than a public place is input as a result of scene recognition, the environment determination unit 502 determines that the environment is an appropriate environment for face recognition processing, and outputs the determination result to the estimation control unit 104 as use status information. Thus, the environment determination unit 502 outputs, as use status information, the determination result indicating whether the environment in which the image is captured by the image obtaining unit 101 is an appropriate environment or an inappropriate environment for face recognition processing based on the estimation result from the environment estimation unit 500 to the estimation control unit 104.

The estimation control unit 104 determines whether to stop the operation of the person estimation unit 102 based on the use status information input from the status monitoring unit 103, and controls the operation mode of the person estimation unit 102.

For example, if the use status information input from the status monitoring unit 103 is information about the determination result indicating that the environment is an inappropriate environment for face recognition processing, the estimation control unit 104 controls the person estimation unit 102 to transition to the estimation stop mode for stopping the face recognition processing or to maintain the estimation stop mode. On the other hand, if the use status information input from the status monitoring unit 103 is information about the determination result indicating that the environment is an appropriate environment for face recognition processing, the estimation control unit 104 controls the person estimation unit 102 to transition to the normal operation mode for performing the face recognition processing or to maintain the normal operation mode. Even when the determination result indicating that the environment is an inappropriate environment for face recognition processing is input as the use status information from the status monitoring unit 103, the estimation control unit 104 may perform control processing to limit the output of the estimation processing result without limiting the execution of the estimation processing by the person estimation unit 102. In other words, since face recognition processing to be performed in a public place may cause the risk of violating the privacy or human rights of people, the estimation control unit 104 controls the person estimation unit 102 to limit at least one of the face recognition processing and the output of the face recognition processing result.

On the other hand, if face recognition processing is performed in a place other than a public place, there is almost no risk of violating the privacy or human rights of people. In this case, the estimation control unit 104 controls the operation of the person estimation unit 102 not to limit the face recognition processing and the output of the face recognition processing result.

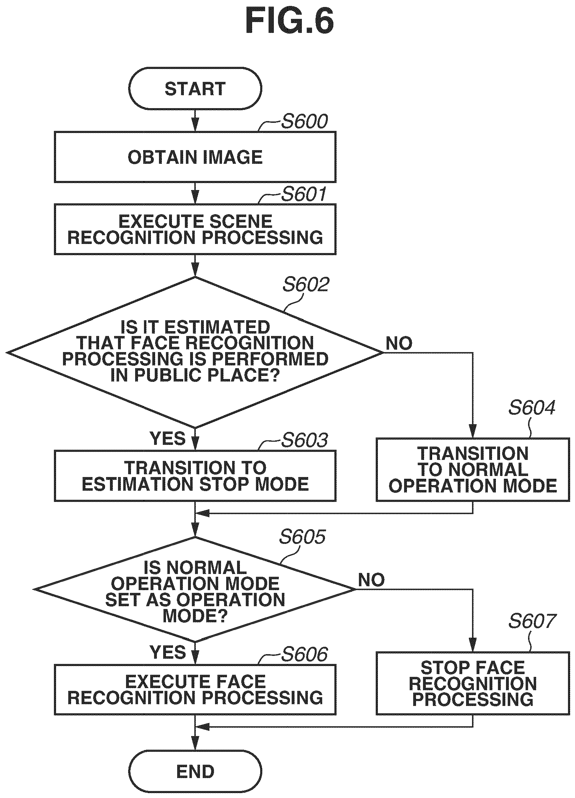

Next, an operation sequence of the AI system 100 according to the first embodiment will be described with reference to a flowchart illustrated in Fig. 6. In the following flowchart, "S" denotes a processing step.

First, as processing of step S600, the image obtaining unit 101 obtains an image.

Next, as processing of step S601, the status monitoring unit 103 determines the use status for the image obtained by the image obtaining unit 101, or estimates the environment in which face recognition processing is performed based on the result of the scene recognition processing by the scene recognition unit 501.

As processing of step S602, the status monitoring unit 103 determines whether the environment in which face recognition processing is performed is a public place based on the scene recognition result.

If the status monitoring unit 103 estimates that the environment is a public place (YES in step S602), the processing proceeds to step S603. As processing of step S603, the estimation control unit 104 controls the operation mode of the person estimation unit 102 to transition to the estimation stop mode. On the other hand, if the status monitoring unit 103 estimates that the environment is not a public place (NO in step S602), the processing proceeds to step S604. As processing of step S604, the estimation control unit 104 controls the operation mode of the person estimation unit 102 to transition to the normal operation mode. After step S603 or step S604, the processing of the AI system 100 proceeds to step S605.

In step S605, the person estimation unit 102 confirms the operation mode controlled by the estimation control unit 104. As processing of step S605, the person estimation unit 102 determines whether the operation mode controlled by the estimation control unit 104 is the normal operation mode. If the controlled operation mode is the normal operation mode (YES in step S605), the processing proceeds to step S606. As processing of step S606, the person estimation unit 102 executes face recognition processing on the image input from the image obtaining unit 101, and outputs the face recognition processing result. On the other hand, if the controlled operation mode is not the normal operation mode, or if the controlled operation mode is the estimation stop mode (NO in step S605), the processing proceeds to step S607. As processing of step S607, the person estimation unit 102 stops execution of face recognition processing on the image input from the image obtaining unit 101, or stops the output of the face recognition processing result.

As described above, the AI system 100 according to the first embodiment estimates the environment in which the image is obtained, or the environment in which estimation processing for face recognition is performed, based on the obtained image. Further, if it is estimated that the environment in which the image is obtained is a public place, the AI system 100 determines that the face recognition processing is used inappropriately and stops the face recognition processing. Alternatively, the AI system 100 may limit the output of the result of estimation processing for face recognition without limiting estimation processing for face recognition even when the environment is an inappropriate environment for face recognition.

That is, if the environment in which estimation processing for face recognition is performed is an inappropriate environment for face recognition processing, such as a public place, the AI system 100 according to the first embodiment limits at least one of the face recognition processing and the output of the face recognition processing result. Consequently, the AI system 100 according to the first embodiment can prevent an inappropriate use of face recognition processing that may cause the risk of violating the privacy or human rights of people. Further, an effect of reducing the load of the apparatus by limiting unnecessary face recognition processing and an effect of reducing the network load by limiting the output of unnecessary face recognition processing results are obtained.

While the first embodiment described above illustrates an example where scene recognition processing is used as a method for estimating the use environment in the status monitoring unit 103, the estimation method is not limited to this example. For example, it may be desirable to determine from which position and in which direction the image is obtained by the image obtaining unit 101 based on detected information from a global positioning system (GPS) and a directional sensor incorporated in the camera, to thereby estimate the use environment (whether an image of a public place is captured, etc.) based on the determination result.

The environment determined to be an inappropriate environment for use of face recognition processing is not limited to a public place. Other examples of the inappropriate environment for use of face recognition processing may include places where the privacy of people should be protected, and places where lack of anonymity causes human rights violations. For example, if there is a possibility that human rights violations or the like may occur due to face recognition processing in a certain country or area, control processing to stop face recognition processing may be performed by estimating the use environment using a GPS or the like.

The first embodiment described above illustrates an example where it is determined whether an image is obtained in a public place using a scene recognition technique to prevent an inappropriate use of face recognition processing based on the determination result, assuming that the use of face recognition processing in a public place or the like is an inappropriate use form of face recognition processing.

In a second embodiment, it is determined whether face recognition processing is performed on a large number of unspecified people, as an inappropriate use form of face recognition processing. Specifically, if face recognition processing is performed on a large number of unspecified people even in a place other than a public place, it can be considered that there is a risk of violating the privacy, human rights, or the like, of people. Accordingly, the second embodiment illustrates an example where face recognition processing to be performed on a large number of unspecified people is determined to be an inappropriate use of face recognition processing.

Like in the example of the first embodiment, an AI system that performs face recognition processing will be described as an application example of the control apparatus according to the second embodiment.

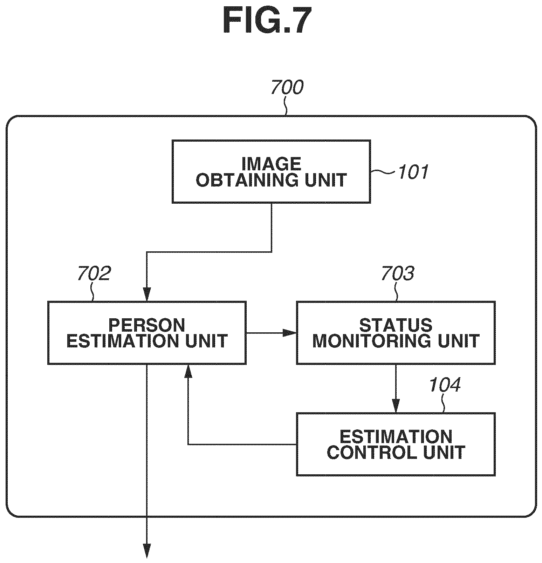

Fig. 7 is a block diagram illustrating a configuration example of an AI system 700 that performs face recognition processing as an application example of the control apparatus according to the second embodiment. Components illustrated in Fig. 7 that include functions similar to those in Fig. 1 described above are denoted by the same reference numerals as those in Fig. 1, and detailed descriptions thereof are omitted.

In the configuration example illustrated in Fig. 7, a person estimation unit 702 performs face recognition processing in the same manner as the person estimation unit 102 illustrated in Fig. 1. However, in the second embodiment, the person estimation unit 702 includes not only the face area detection function implemented by the person estimation unit 102 illustrated in Fig. 1 but also a function of obtaining information indicating how many faces are detected from an input image and notifying a status monitoring unit 703 of information indicating the number of detected faces. The configuration of the person estimation unit 702 is similar to the configuration of the person estimation unit 102 illustrated in Fig. 3 described above. However, in the second embodiment, the face detection unit 301 includes not only the face detection function as described above but also a function of counting the number of detected faces. The face detection unit 301 according to the second embodiment notifies the status monitoring unit 703 of information indicating the counted number of detected faces.

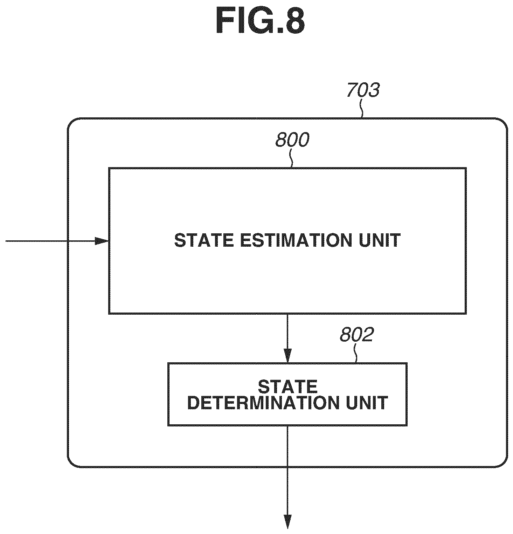

Fig. 8 is a block diagram illustrating a configuration example of the status monitoring unit 703 according to the second embodiment.

In the configuration example illustrated in Fig. 8, a state estimation unit 800 estimates the state of each person to which face recognition processing is applied in the person estimation unit 702. In the second embodiment, the state estimation unit 800 estimates whether face recognition processing is performed on a large number of unspecified people in the person estimation unit 702 based on the number of detected faces input from the person estimation unit 702. The number of detected faces input from the person estimation unit 702 is the number of detected faces in one image. Accordingly, a large number of detected faces indicates that a large number of unspecified people are captured in the image. In this case, the person estimation unit 702 may estimate that face recognition processing is performed on the image including a large number of unspecified people. For example, a large number of faces can be detected from the image 200 illustrated in Fig. 2, and the detection of a large number of faces from one image is an important evidence for determination as to whether face recognition processing is performed on a large number of unspecified people. Accordingly, if the number of detected faces input from the person estimation unit 702 is more than or equal to a predetermined threshold, the state estimation unit 800 estimates that face recognition processing is performed on the image including a large number of unspecified people. Further, the state estimation unit 800 outputs the estimation result to a state determination unit 802.

The state determination unit 802 determines whether the image obtained by the image obtaining unit 101 is an appropriate target on which face recognition processing is performed based on the estimation result input from the state estimation unit 800. In the second embodiment, if the estimation result indicating that a large number of unspecified people are captured in the image is input from the state estimation unit 800, the state determination unit 802 determines that the image is an inappropriate target on which face recognition processing is performed, and outputs the determination result to the estimation control unit 104.

The estimation control unit 104 according to the second embodiment controls the operation mode of the person estimation unit 702 to one of the normal operation mode and the estimation stop mode based on the determination result input from the status monitoring unit 703. Specifically, if the estimation result indicating that the image including a large number of unspecified people is an inappropriate image for face recognition processing is input from the status monitoring unit 703, the estimation control unit 104 performs control processing to limit at least one of the face recognition processing and the output of the face recognition processing result.

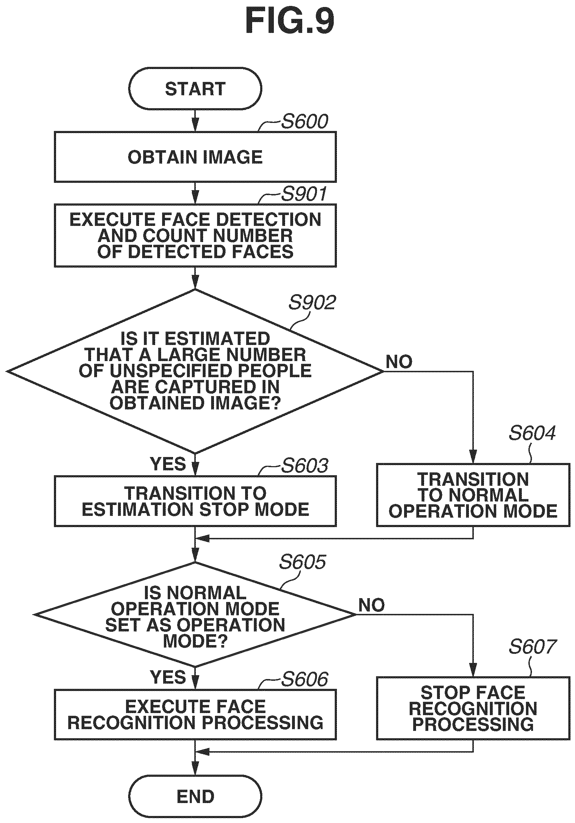

Fig. 9 is a flowchart illustrating processing performed by the AI system 700 according to the second embodiment. Processing steps illustrated in Fig. 9 that are similar to those in Fig. 6 are denoted by the same reference numerals as those in Fig. 6, and descriptions thereof are omitted. In the flowchart according to the first embodiment illustrated in Fig. 6, the environment estimation unit 500 determines whether face recognition processing is used inappropriately by estimating the place in which face recognition processing is used (whether the environment is a public place). In the flowchart according to the second embodiment illustrated in Fig. 9, the status monitoring unit 703 determines whether face recognition processing is used inappropriately by estimating the state of persons in the image (whether a large number of unspecified people are captured in the image).

In the flowchart illustrated in Fig. 9, after processing of step S600, the processing of the AI system 700 proceeds to step S901.

In step S901, the person estimation unit 702 performs face detection processing on the image input from the image obtaining unit 101, counts the number of detected faces, and outputs information indicating the number of detected faces to the status monitoring unit 703.

Next, as processing of step S902, the status monitoring unit 703 determines whether it is estimated that a large number of unspecified people are captured in the image obtained by the image obtaining unit 101 based on the number of detected faces counted by the person estimation unit 702. If it is estimated that a large number of unspecified people are captured in the image (YES in step S902), the processing proceeds to step S603. As processing of step S603, the estimation control unit 104 controls the operation mode of the person estimation unit 702 to transition to the estimation stop mode. On the other hand, if it is estimated that a large number of unspecified people are not captured in the image (NO in step S902), the processing proceeds to step S602. As processing of step S604, the estimation control unit 104 controls the operation mode of the person estimation unit 702 to transition to the normal operation mode. The subsequent processing is similar to that in the flowchart of Fig. 6 described above, and thus the description thereof is omitted.

The AI system 700 according to the second embodiment determines whether to execute face recognition processing based on the face detection result. Accordingly, the face recognition processing is temporarily stopped when face detection processing is performed on the input image. Further, in the AI system 700, the status monitoring unit 703 determines whether a large number of unspecified people are captured in the image, and controls the operation mode of the estimation control unit 104 based on the determination result. In other words, if it is determined that face recognition processing is performed on a large number of unspecified people, the AI system 700 according to the second embodiment determines that face recognition processing is used inappropriately and stops execution of face recognition processing (processing subsequent to biometric identifier extraction processing) or stops the output of the face recognition processing result.

While the second embodiment illustrates an example where the number of detected faces in the image is used as a criterion for determining whether to perform face recognition processing on a large number of unspecified people, the determination method is not limited to the method using the number of detected faces. For example, a crowd estimation technique for estimating the degree of congestion of people in an image may be used. In this example, if a certain degree or higher of congestion is detected, it can be determined that face recognition processing is performed on a large number of unspecified people. The number of detected faces in an image and the crowd estimation technique as described above are merely examples of the method for detecting a large number of unspecified people as a face recognition processing target, and the technique for estimating a target state in the state estimation unit 800 is not limited to these examples. Any other method may be used as long as it can be detected that face recognition processing is performed on a large number of unspecified people.

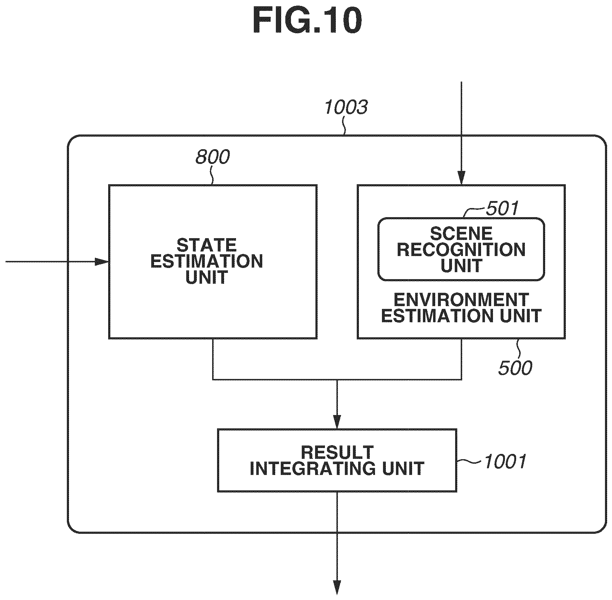

Next, as a third embodiment, a configuration example in which a status monitoring unit according to the third embodiment includes both the functions of the status monitoring unit 103 described in the first embodiment and the status monitoring unit 703 described in the second embodiment will be described. The configuration of an AI system according to the third embodiment is basically the same as the configuration of the AI system 700 illustrated in Fig. 7 described above, and thus the illustration and description thereof are omitted. A status monitoring unit 1003 according to the third embodiment has a configuration as illustrated in Fig. 10. Components illustrated in Fig. 10 that are identical to those in Figs. 3 and 8 are denoted by the same reference numerals as those in Figs. 3 and 8, and detailed descriptions thereof are omitted. The status monitoring unit 1003 according to the third embodiment includes the environment estimation unit 500, which is similar to that described in the first embodiment, the state estimation unit 800, which is similar to that described in the second embodiment, and a result integrating unit 1001.

In the configuration example illustrated in Fig. 10, the result integrating unit 1001 uses two estimation results from the environment estimation unit 500 and the state estimation unit 800 described above, to thereby determine whether face recognition processing to be performed on the image obtained by the image obtaining unit 101 is used appropriately or inappropriately. In other words, the result integrating unit 1001 integrates the two estimation results and determines whether it is appropriate to perform face recognition processing on each person captured in the image obtained by the image obtaining unit 101. As a method for integrating two estimation results, various methods may be used depending on criteria for determination as to whether face recognition processing is used inappropriately. For example, a method of finally determining that face recognition processing is used inappropriately only when it is estimated that it is inappropriate to perform face recognition processing based on two estimation results may be used. In addition, a method of finally determining that face recognition processing is used inappropriately when it is estimated that it is inappropriate to perform face recognition processing based on one of two estimation results may also be used.

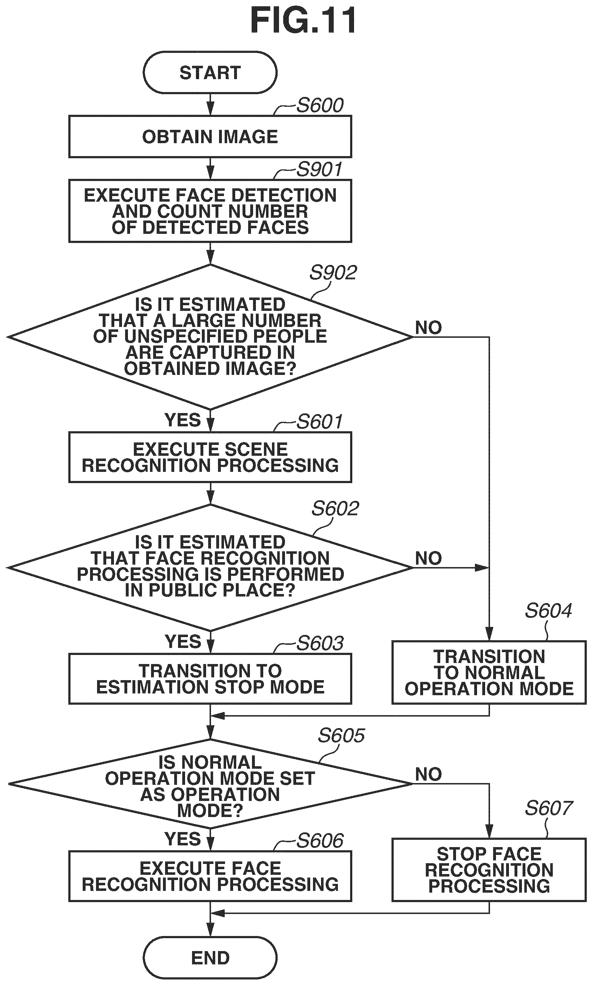

Fig. 11 is a flowchart illustrating processing performed by the AI system according to the third embodiment including the status monitoring unit 1003 having the configuration illustrated in Fig. 10. The flowchart of Fig. 11 illustrates an operation sequence in a case where face recognition processing is actually stopped when it is determined that face recognition processing is used inappropriately based on two estimation results from the environment estimation unit 500 and the state estimation unit 800. Specifically, the flowchart of Fig. 11 illustrates a flow of processing for stopping face recognition processing or stopping the output of the face recognition result in a case where face recognition processing is performed on a large number of unspecified people in a public place. Fig. 11 is a flowchart illustrating a combination of processing in the flowchart of Fig. 6 and processing in the flowchart of Fig. 9. Processing steps illustrated in Fig. 11 that are similar to those in Fig. 6 are denoted by the same step numbers as those in Fig. 6, and processing steps illustrated in Fig. 11 that are similar to those in Fig. 9 are denoted by the same step numbers as those in Fig. 9, and detailed descriptions are omitted as needed.

As illustrated in the flowchart of Fig. 11, after the processing of step S600, the processing of the AI system according to the third embodiment proceeds to step S901 and further proceeds to step S902. In step S902, if it is estimated that a large number of unspecified people are captured in the image (YES in step S902), the processing of the AI system proceeds to step S601 to execute scene recognition processing. After that, the processing proceeds to step S602. In step S902, if it is estimated that a large number of unspecified people are not captured in the image (NO in step S902), the processing of the AI system proceeds to step S604.

If it is estimated that the environment is a public place (YES in step S602), the processing of the AI system proceeds to step S603. On the other hand, if it is estimated that the environment is not a public place (NO in step S602), the processing proceeds to step S604.

After the processing of step S603 or step S604, the processing of the AI system proceeds to step S605. The processing subsequent to step S605 is similar to that described above, and thus the description thereof is omitted.

The first to third embodiments described above illustrate an example where if it is determined that face recognition processing is used inappropriately, the face recognition processing is stopped or the output of the face recognition processing result is stopped. A fourth embodiment to be described below illustrates an example where if it is determined that face recognition processing is used inappropriately, a warning indicating that face recognition processing is used inappropriately is first displayed instead of immediately stopping face recognition processing. The fourth embodiment also illustrates an example where an action request is issued to a user (user of the AI system) in response to a warning display, and it is determined whether face recognition processing is to be stopped based on an action from the user. The fourth embodiment also illustrates an example where even when the status monitoring unit determines that face recognition processing is used inappropriately, if it is truly unavoidable to perform face recognition processing, the face recognition processing can be performed. Examples of a case where it is truly unavoidable to perform face recognition processing even when it is determined that face recognition processing is used inappropriately include a case where execution of face recognition processing is allowed by a formal warrant or the like by a public authority or the like.

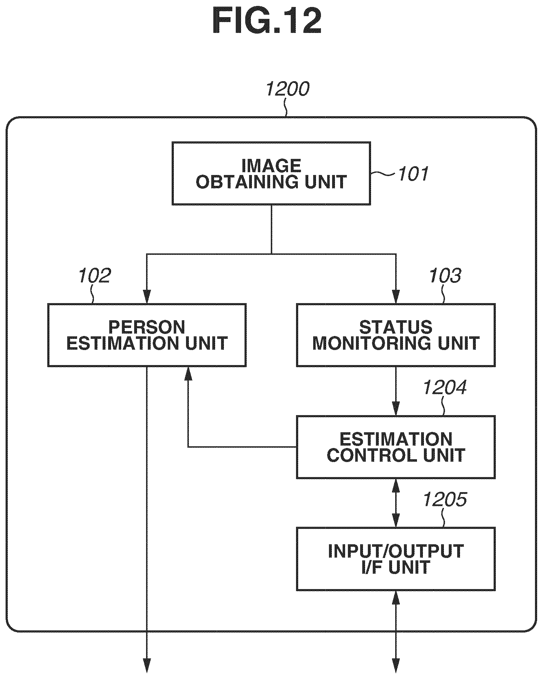

Fig. 12 is a block diagram illustrating a configuration example of an AI system 1200 according to the fourth embodiment. Components illustrated in Fig. 12 that are identical to those illustrated in Fig. 1 are denoted by the same reference numerals as those in Fig. 1, and descriptions thereof are omitted.

Upon receiving information about the estimation result indicating that the environment is inappropriate for face recognition processing, an estimation control unit 1204 according to the fourth embodiment outputs the information to an input/output interface (I/F) unit 1205, in addition to the operation of the estimation control unit 104 according to the first embodiment. Further, the estimation control unit 1204 transmits an instruction indicating whether to perform face recognition processing (transition to which operation mode, or maintain which operation mode) depending on user action information input via the input/output I/F unit 1205 to the person estimation unit 102.

If information indicating that the environment is inappropriate for face recognition processing is input from the estimation control unit 1204, the input/output I/F unit 1205 transmits the information to the user (user of the AI system) as a warning notification. In the fourth embodiment, examples of the warning notification include display of such a warning that "possibility that face detection processing is performed in a public place is detected". Further, the input/output I/F unit 1205 requests the user to input information indicating whether the user accepts the warning notification. Examples of the request for the user in response to the warning notification (warning display) include a request for the user to select one of two displayed options, i.e., an option to "instruct execution of face recognition processing because the environment is not a public place" and an option to "stop face recognition processing because the environment is a public place".

This configuration enables recovery of processing, for example, when the estimation result from the status monitoring unit 103 is incorrect. Specifically, even when the estimation result from the status monitoring unit 103 is incorrect, there is no need to immediately stop face recognition processing, thereby making it possible to prevent the user from being unnecessarily confused. Also, even when the user has inadvertently performed face recognition processing in a public place, the display of a warning allows the user to notice the inadvertent operation, so that it can be expected that the user can be prevented from repeatedly making the same mistake in the subsequent processing.

The input/output I/F unit 1205 transmits action information from the user as described above to the estimation control unit 1204. If information "instruct face recognition processing because the environment is not a public place" is input from the user as action information, the estimation control unit 1204 controls the person estimation unit 102 to transition to the normal operation mode or to maintain the normal operation mode.

Alternatively, the input/output I/F unit 1205 may display, for example, a third option to "instruct face recognition processing because the status is truly unavoidable" for the user, in addition to the option to "instruct face recognition processing because the environment is not a public place" and the option to "stop face recognition processing because the environment is a public place", and may cause the user to select one of the options. In this case, if the third option is selected by the user, a request for inputting an emergency code is issued to the user. After the emergency code is input, an instruction to execute face recognition processing is transmitted to the estimation control unit 1204. Assume herein that the emergency code is a code (password) or the like issued by a company or person that has developed the AI system 1200 according to the fourth invention when a formal warrant or the like is issued by a public authority. If the formal code issued by the company or person that has developed the AI system is input, it can be confirmed that face recognition processing in a public place is allowed using a formal procedure. Thus, the AI system can be operated to perform face recognition processing even in a public place.

While the fourth embodiment illustrates an example where the status monitoring unit 103 is monitoring whether "face recognition processing is performed in a public place", the processing according to the fourth embodiment is not limited to this example. For example, also in a case where the status monitoring unit 103 is monitoring whether "face recognition processing is performed on a large number of unspecified people", the operation mode of the person estimation unit 102 can be controlled using the input/output I/F unit 1205.

While the embodiments described above illustrate an example where the operation mode is sequentially switched based on the estimation result transmitted from the status monitoring unit 103, there is no need to perform the operation mode switching control processing every time an image is input from the image obtaining unit 101. For example, the status monitoring unit 103 described above outputs use status information based on the scene recognition result every time an image is input from the image obtaining unit 101, and transmits the output use status information to the estimation control unit 104. On the other hand, if the estimation result indicating that the environment is a public place is input from the status monitoring unit 103 for a predetermined threshold or more of images among a predetermined number of images, the estimation control unit 104 may control the person estimation unit 102 to transition to the estimation stop mode or to maintain the estimation stop mode. In other words, only when a ratio of a number of images determined to be images of a public place is more than or equal to a predetermined ratio threshold, the face recognition processing may be stopped or the output of the face recognition processing result may be stopped. Consequently, a tolerance for erroneous recognition (erroneous scene estimation) that may be caused during scene recognition can be enhanced.

As described above, if the status monitoring unit 103 determines the environment in which face recognition processing is used on a plurality of images, the determination as to "whether face recognition processing is performed on a large number of unspecified people" described in the second embodiment can be performed as follows. That is, in the second embodiment, the number of detected faces in each image is used as a criterion, but instead "the ratio of the number of correct recognitions to the number of detected faces" may be used as a criterion. The term "correct recognition" as used herein refers to a determination that a person is detected as a registered person as a result of comparison based on face recognition. For example, if face recognition is performed to search for a person on a blacklist (wanted person etc.) on the streets, it is expected that the number of correct recognitions with respect to the number of detected faces is extremely small. In other words, a large number of people captured in an image do not include a person on a blacklist in many cases, and it is extremely rare that the person on the blacklist can be captured in the image. Thus, if "the ratio of the number of correct recognitions to the number of detected faces" is less than the predetermined ratio threshold, which is determined to be an extremely small value, it can be said that the ratio is useful information based on which it can be estimated that face recognition processing is performed on a large number of unspecified people.

While the embodiments described above illustrate an example where it is determined whether face recognition technique is used appropriately or inappropriately, the use determination target is not limited to the face recognition technique. For example, the use determination target may be an emotion estimation technique. The emotion estimation technique is similar to the face recognition technique in that some use methods may cause the risk of violating the privacy or human rights of people. Accordingly, the emotion estimation technique may also be used as a target to determine whether the processing is used appropriately or inappropriately.

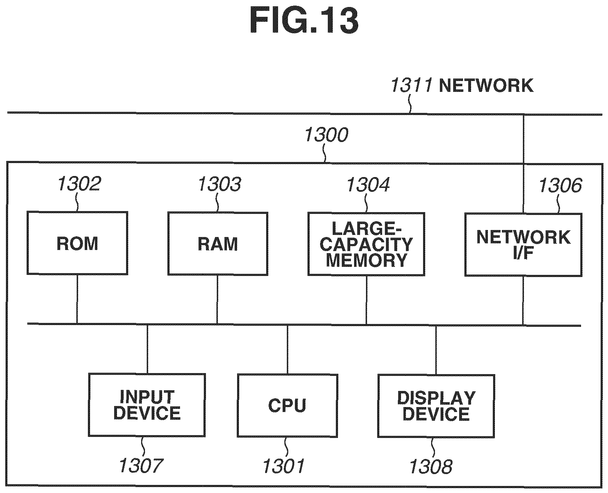

Fig. 13 is a block diagram illustrating a hardware configuration example of an information processing apparatus to which the control apparatuses according to the embodiments described above can be applied.

A control apparatus 1300 includes a central processing unit (CPU) 1301, a read only memory (ROM) 1302, a random-access memory (RAM) 1303, a large-capacity memory 1304, a network I/F 1306, an input device 1307, and a display device 1308. The network I/F 1306 is connected to a network 1311. An image capturing device that captures an image obtained by the image obtaining unit 101 may be connected to the control apparatus 1300 via the network 1311, or may be included in the control apparatus 1300.

The CPU 1301 controls the control apparatus 1300 in an integrated manner. The ROM 1302 stores control programs for the CPU 1301 to control the control apparatus 1300, control programs for performing control processing on the functional units of the control apparatuses illustrated in Figs. 1, 7, and 12 described above, and the like. The RAM 1303 is a memory into which programs read out from the ROM 1302 are loaded and the CPU 1301 executes the programs. The RAM 1303 is also used as a temporary storage area for temporarily storing various processing target data.

The network I/F 1306 is a circuit for establishing a communication via the network 1311.

The CPU 1301 performs processing for the functional unit of the control apparatuses described above on the image received by the network I/F 1306.

The large-capacity memory 1304 is a hard disk drive (HDD), a solid-state drive (SSD), or the like, and can store images and the like obtained by the image obtaining unit 101. Accordingly, the CPU 1301 can read out images stored in the large-capacity memory 1304, and can perform the above-described processing and the like on the images.

The display device 1308 is a display device that displays images, text, and the like, and displays a notification or the like for the user.

The input device 1307 is a device including at least one of a keyboard for input, a pointing device, a touch panel, and the like on a screen display on the display device 1308. The user of the control apparatus 1300 can input the above-described action information or the like via the input device 1307, and the CPU 1301 performs processing depending on the action information from the user.

As described above, the hardware configuration of the control apparatus 1300 includes components similar to those of hardware mounted on an information processing apparatus such as a general personal computer (PC). Accordingly, various functions implemented by the control apparatus 1300 can also be implemented as software (program) to run on a PC. The CPU 1301 executes control programs according to the present embodiment, thereby making it possible to implement processing for the functional units illustrated in Figs. 1, 7, and 12 and the like. Each functional unit of the control apparatuses illustrated in Figs. 1, 7, and 12 and the like may also be implemented as a circuit configuration.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments but is defined by the scope of the following claims.

## Claims

1. A control apparatus comprising:
an image obtaining unit (101) configured to obtain an image including a person;
a person estimation unit (102) configured to execute estimation processing to estimate information about the person based on the image and output a result of the estimation processing;
a status monitoring unit (103) configured to determine a use status of the estimation processing by the person estimation unit; and
an estimation control unit (104) configured to limit at least one of the estimation processing and the output of the result of the estimation processing by the person estimation unit based on a result of the determination of the use status by the status monitoring unit,
wherein the status monitoring unit (103) includes:
an environment estimation unit (500) configured to estimate an environment in which the image to be used for the estimation processing is obtained including a scene recognition unit (501) configured to recognize a type of a place as the environment in which the image is obtained; and
an environment determination unit (502) configured to determine whether the environment estimated by the environment estimation unit (500) is an appropriate environment for use of the estimation processing,
wherein the environment determination unit is configured to determine whether the type of the place recognized by the scene recognition unit (501) is an appropriate place for use of the estimation processing, and
wherein a determination result from the environment determination unit is used to generate the result of the determination of the use status.

2. The control apparatus according to claim 1,
wherein in a case where the type of the place recognized by the scene recognition unit (501) is a place of a predetermined type, the environment determination unit (502) determines that the place is not an appropriate place for use of the estimation processing, and
wherein the estimation control unit (104) is configured to limit at least one of the estimation processing by the person estimation unit (102) and the output of the result by the person estimation unit (102) based on a determination result indicating that the place is not an appropriate place for use of the estimation processing.

3. The control apparatus according to claim 2, wherein the place of the predetermined type is a public place.

4. The control apparatus according to any one of the preceding claims,
wherein the status monitoring unit (1003) includes:
a state estimation unit (800) configured to estimate a state of the person estimated by the person estimation unit (102); and
a state determination unit (802) configured to determine whether the state estimated by the state estimation unit is an appropriate state for use of the estimation processing, and
wherein a determination result by the state determination unit is used to generate the result of the determination of the use status.

5. The control apparatus according to claim 4,
wherein the state estimation unit is configured to count a number of persons included in the image as the state of the person, and
wherein the state determination unit is configured to determine whether the state is an appropriate state for use of the estimation processing based on the number of the persons counted by the state estimation unit.

6. The control apparatus according to claim 5,
wherein in a case where the number of the persons counted by the state estimation unit (800) is more than or equal to a predetermined threshold, the state determination unit (802) determines that the state is not an appropriate state for use of the estimation processing, and
wherein the estimation control unit (104) is configured to limit at least one of the estimation processing by the person estimation unit (102) and the output of the result by the person estimation unit (102) based on a determination result indicating that the state is not an appropriate state for use of the estimation processing.

7. The control apparatus according to claim 6,
wherein the state estimation unit (800) is configured to estimate an emotion of the person as the state of the person, and
wherein the state determination unit (802) is configured to determine whether the state is an appropriate state for use of the estimation processing based on the emotion of the person estimated by the state estimation unit.

8. The control apparatus according to any one of the preceding claims, wherein in a case where the determination result obtained from the status monitoring unit (103) indicates that the status is not an appropriate status for use of the estimation processing for a predetermined threshold or more of images among a plurality of images obtained by the image obtaining unit (101), the estimation control unit (104) limits at least one of the estimation processing by the person estimation unit (102) and the output of the result by the person estimation unit (102).

9. The control apparatus according to any one of claims 1 to 7, wherein in a case where a ratio of images for which the use status is determined to be inappropriate for use of the estimation processing by the status monitoring unit (103) to a plurality of images obtained by the image obtaining unit (101) is more than or equal to a predetermined threshold, the estimation control unit (104) limits at least one of the estimation processing by the person estimation unit (102) and the output of the result by the person estimation unit (102).

10. The control apparatus according to any one of the preceding claims,
wherein the person estimation unit (102) includes a first mode in which the estimation processing is executed, and a second mode in which the estimation processing is not executed or the result of the estimation processing is not output, and
wherein the estimation control unit (104) is configured to switch a mode of the person estimation unit (102) to either the first mode or the second mode based on the result of the determination of the use status.

11. The control apparatus according to any one of the preceding claims, wherein the person estimation unit (102) includes:
a face detection unit (301) configured to detect a face of the person from the image;
an identifier extraction unit (302) configured to extract a biometric identifier used to identify the person; and
a person identifying unit (304) configured to identify the person corresponding to the face detected from the image based on a result of comparison between the biometric identifier extracted by the identifier extraction unit and biometric identifiers for registered persons.

12. The control apparatus according to claim 11,
wherein the face detection unit (301) is configured to count a number of person's faces detected from the image, and
wherein the status monitoring unit (103) is configured to determine the use status of the estimation processing by the person estimation unit (102) based on a ratio between the counted number of the detected faces and the number of persons identified as the registered persons by the person identifying unit (304).

13. The control apparatus according to claim 12, wherein in a case where the ratio is less than a predetermined threshold, the estimation control unit (104) limits at least one of the estimation processing by the person estimation unit (102) and the output of the result by the person estimation unit (102).

14. The control apparatus according to any one of the preceding claims, further comprising notification means configured to notify a user of the result of the determination of the use status of the estimation processing by the status monitoring unit (103).

15. The control apparatus according to claim 14, further comprising input means for inputting information about an action by the user in response to the notification by the notification means.

16. The control apparatus according to claim 15, wherein in a case where action information indicating execution of the estimation processing is input from the user through the input means, the estimation control unit executes one of the estimation processing and the output of the result by the person estimation unit.

17. A control method comprising:
obtaining an image including a person;
executing estimation processing to estimate information about the person based on the image;
outputting a result of the estimation processing;
determining a use status of the estimation processing; and
executing control processing to limit at least one of the estimation processing and output of the result based on a result of the determination of the use status,
wherein the determination includes:
estimating an environment in which the image to be used for the estimation processing is obtained;
recognizing a type of a place in which the image is obtained as the environment in which the image is obtained; and
determining whether the estimated environment is an appropriate environment for use of the estimation processing,
wherein the environment determination includes determining whether the recognized type of the place is an appropriate place for use of the estimation processing, and
wherein a determination result of the environment determination is used to generate the result of the determination of the use status.

18. A storage medium storing a program for causing a computer to carry out the method of claim 17.
